(19) Europäisches Patentamt
European Patent Office
Office européen des brevets

(11) **EP 2 983 489 B1**

(12) **EUROPEAN PATENT SPECIFICATION**

(45) Date of publication and mention of the grant of the patent:
**31.10.2018 Bulletin 2018/44**

(51) Int Cl.:
*A23G 9/24* *(2006.01)*    *A23G 9/26* *(2006.01)*
*A23G 9/34* *(2006.01)*    *A23G 9/48* *(2006.01)*
*A23L 5/00* *(2016.01)*    *A23G 9/06* *(2006.01)*
*A23G 9/32* *(2006.01)*    *A23P 20/10* *(2016.01)*

(21) Application number: **14709262.1**

(22) Date of filing: **10.03.2014**

(86) International application number:
**PCT/EP2014/054588**

(87) International publication number:
**WO 2014/166682 (16.10.2014 Gazette 2014/42)**

(54) **PROCESS FOR THE MANUFACTURE OF A FROZEN CONFECTION**

VERFAHREN ZUR HERSTELLUNG EINER GEFRORENEN SÜSSWARE

PROCÉDÉ DE FABRICATION D'UNE CONFISERIE GLACÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.04.2013 EP 13162682**

(43) Date of publication of application:
**17.02.2016 Bulletin 2016/07**

(73) Proprietors:
• **Unilever PLC**
**London, Greater London EC4Y 0DY (GB)**
Designated Contracting States:
**CY GB IE MT**
• **Unilever N.V.**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**

(72) Inventors:
• **ALDRED, Deborah Lynne**
**Bedford**
**Bedfordshire MK44 1LQ (GB)**

• **BRAMLEY, Allan Sidney**
**Bedford**
**Bedfordshire MK44 1LQ (GB)**

(74) Representative: **Turner, Felicity Margaret Mary et al**
**Unilever Patent Group**
**Colworth House**
**Sharnbrook, Bedford MK44 1LQ (GB)**

(56) References cited:
**WO-A1-2013/007493    US-A- 3 752 678**
**US-A- 4 985 263    US-A1- 2013 045 246**
**US-B1- 6 379 724**

• **DATABASE WPI Week 198546 Thomson Scientific, London, GB; AN 1985-286660 XP002703568, & JP S60 196153 A (NITTA GELATIN KK) 4 October 1985 (1985-10-04)**
• **ANONYMOUS: "Nestlé's first peelable ice cream rolls out worldwide", INTERNET CITATION, 16 February 2011 (2011-02-16), pages 1-2, XP002668463, Retrieved from the Internet: URL:http://www.nestle.com/Media/NewsAndFeatures/Pages/Nestles-first-peelable-ice-cream-roll-out-worldwide.aspx [retrieved on 2012-01-31]**

**Description**

**Technical Field of the Invention**

The present invention relates to a process for the production of a frozen confection. In particular, it relates to a process for the production of a frozen confection having a peelable coating.

**Background of the Invention**

Consumers of frozen confections are constantly looking for new experiences. Products have recently been launched that have a frozen confection core with gel layer on the outside. This gel layer can be peeled away from the frozen confection core and eaten separately providing an exciting and different eating experience. The peelable layer in these products is a gel that has been formed using thermosetting gelling agents such as locust bean gum. Because the gel is thermosetting, it requires the liquid mix to be heated to an elevated temperature during processing and production in order to combine the ingredients and to form a pourable, flowable mix that can be placed into moulds. As the heated mix contacts the inner surface of the mould it cools and gradually sets to form the gel layer of the product and the remaining un-set mix is removed using the "fill and suck" technique. The components of the inner core are then added and frozen. However, processes such as this have many drawbacks. The need to heat the mixes demands increased energy consumption for heating. It also demands increased energy consumption because the heated mix then has to be cooled back down in order to freeze the products. The use of heated liquids also presents a danger to employees on the production line. Production lines also have to run at a reduced speed because of the time taken in heating and cooling the mixes. Finally, the use of heated liquids increases the risk of microbial contamination. There is therefore a need to make these products using another process, ideally one that does not require the gel mix to be heated.
Chemically setting gelling systems provide an alternative to thermosetting gelling systems and do not require elevated temperatures. However it has been found that simply replacing the thermosetting system used in existing products with a chemically setting gelling system does not provide suitable products. For example, the jelly layer sets too quickly and therefore cannot be applied as a coating layer around an inner core and is therefore also unsuitable for fill and suck techniques. There is therefore a need for a new process that allows the production of frozen confections with a peelable layer that overcomes all of the foregoing difficulties.

**Summary of the Invention**

It has now been found that a specific process allows a chemically setting gelling system to be used for the production of frozen confections with a peelable coating. The invention therefore provides a process for the manufacture of a frozen confection product comprising the steps of:

a) Providing a frozen confection core and
b) Dipping the frozen confection core in liquid nitrogen and then applying a coating material comprising from 10 wt% to 60 wt% total solids, from 0.1 wt % to 5 wt% of a chemically setting gelling biopolymer selected from the group consisting of alginates, iota-carrageenan and kappa-carrageenan, and from 0.05 wt% to 2 wt% pectin to the frozen confection core

wherein
a second material comprising from 0.25 wt% to 10 wt% of a source of divalent cations is applied to the product between steps a) and b) or after step b).
Preferably the coating material is applied by dipping or by spraying.
Preferably the second material is applied by dipping or by spraying.
Preferably the product is dipped in liquid nitrogen immediately prior to the application of the second material.
Preferably the frozen confection core is selected from the group consisting of water ices, milk ices, fruit ices, ice creams, frozen yoghurts, and sorbets. More preferably the frozen confection core is a water ice or a milk ice.
Preferably the frozen confection core comprises at most 0.2 wt% of a source of divalent cations, more preferably at most 0.1 wt%, more preferably still at most 0.01 wt%, yet more preferably at most 0.001 wt%. Preferably the frozen confection core is free from a source of divalent cations.

Chemically setting gelling biopolymer

The chemically setting gelling biopolymer is present in the coating material in an amount of at least 0.1 wt%, more preferably at least 0.25 wt%, more preferably still at least 0.5 wt%, yet more preferably at least 0.7 wt%, most preferably at least 0.75 wt%.

The chemically setting gelling biopolymer is present in the coating material in an amount of at most 5 wt%, more preferably at most 3 wt%, more preferably still at most 2 wt%, yet more preferably at most 1.75 wt%, most preferably at most 1.5 wt%.

The chemically setting gelling biopolymer is selected from the group consisting of alginates, iota-carrageenan, and kappa-carrageenan.

Preferably the chemically setting gelling biopolymer is sodium alginate.

Where the chemically setting gelling biopolymer is not pectin, the coating material comprises at least 0.05 wt% pectin, more preferably at least 0.1 wt% more preferably still at least 0.2 wt%, yet more preferably at least 0.3 wt%, even more preferably at least 0.4 wt%.

Where the chemically setting gelling biopolymer is not pectin, the coating material preferably also comprises at most 2 wt% of pectin, more preferably at most 1 wt%, more preferably still at most 0.75 wt%, yet more preferably at most 0.6 wt%.

The coating material comprises at least 10 wt% total solids, more preferably at least 15 wt%, more preferably still at least 20 wt%, yet more preferably at least 25 wt%.

The coating material comprises at most 60 wt% total solids, more preferably at most 45 wt%, more preferably still at most 40 wt%, yet more preferably at most 35wt%.

Source of divalent cations

The source of divalent cations is present in the second material in an amount of at least 0.25 wt%, more preferably at least 0.5 wt%, more preferably still at least 1 wt%, yet more preferably at least 2 wt%, most preferably at least 3 wt%.

The source of divalent cations is present in the second material in an amount of at most 10 wt%, more preferably at most 7.5 wt%, more preferably still at most 5 wt%, yet more preferably at most 4.5 wt%, most preferably at most 3.5 wt%.

Preferably the divalent cations are selected from the group consisting of $Ca^{2+}$, $Cu^{2+}$, or $Zn^{2+}$.

Where the chemically setting gelling biopolymer is an alginate the source of divalent cations preferably comprises a source of $Ca^{2+}$ ions, more preferably it contains calcium chloride as the source of divalent cations.

Preferably the second material comprising the source of divalent cations also comprises at least 1 wt% of an acid, more preferably at least 2.5 wt%, more preferably still at least 5 wt%, yet more preferably at least 10 wt%.

Preferably the second material comprising the source of divalent cations also comprises at most 50 wt% of an acid, more preferably at most 35 wt%, more preferably still at most 25 wt%, yet more preferably at most 15 wt%, most preferably at most 12.5 wt%.

Preferably the acid is citric acid.

Preferably the second material comprising the source of divalent cations has a pH of at most 6, more preferably at most 5, more preferably still at most 4, and preferably at least 2, most preferably at least 3.

Preferably the frozen confection core is provided on a stick.

The process allows for the production of a new product format that has previously not been possible.

**Summary of Figures**

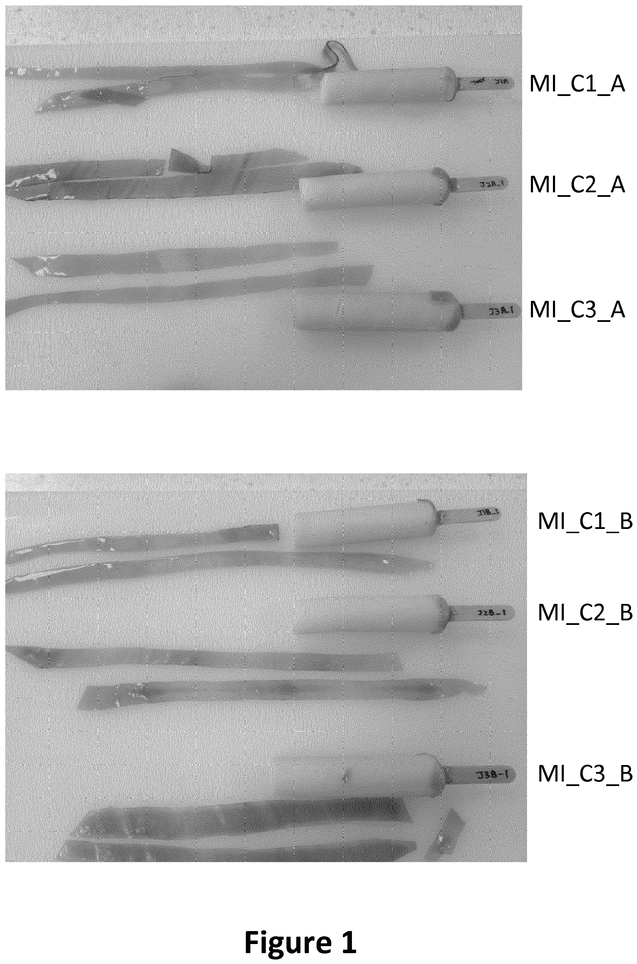

Figure 1 shows peeled Milk Ice products produced according to the process if the invention.

**Detailed Description of the Invention**

Unless defined otherwise, all technical and scientific terms used herein have the same meaning as commonly understood by one of ordinary skill in the art (e.g. in frozen food manufacture). Definitions and descriptions of various terms and techniques used in frozen confectionery manufacture are found in "Ice Cream", 6th Edition R.T. Marshall, H.D. Goff and R.W. Hartel, Kluwer Academic / Plenum Publishers, New York 2003 and "The Science of Ice Cream", C.J. Clarke, Royal Society of Chemistry, Cambridge, 2004.

Frozen confections are sweet-tasting fabricated foodstuffs intended for consumption in the frozen state (i.e. under conditions wherein the temperature of the foodstuff is less than 0°C, and preferably under conditions wherein the foodstuff comprises a significant amount of ice). Frozen confections include water ices and fruit ices, which comprise water and one or more of sugars, stabilisers, colours and flavours, but little or no fat or protein (e.g. less than 5 wt% of each, preferably less than 2 wt%). Frozen confections also include ice creams, frozen yoghurts, milk ices, sorbets and the like.

The frozen confection may be aerated or unaerated. The extent of the aeration can be measured in terms of the volume of the aerated product. The extent of aeration is typically defined in terms of "overrun". In the context of the present invention, % overrun is defined in volume terms as:

$$\text{Overrun (\%)} = \frac{(\text{ volume of final aerated product} - \text{volume of unaerated mix })}{\text{volume of unaerated mix}} \times 100$$

If the frozen confection is aerated, the overrun is preferably at least 20%, more preferably at least 50%. It is preferable that the overrun does not exceed 200%, more preferably the overrun is less than 130%. Overrun is typically produced by intentionally incorporating gas into the product, such as by mechanical agitation. The gas can be any food-grade gas such as air, nitrogen or carbon dioxide.

Multilayered frozen confections are often made using the fill and suck technique. In this technique a mould is provided into which a liquid mix of a frozen confection is introduced. The mould is cooled to a temperature at which the liquid mix of a frozen confection will freeze when it comes into contact with the inner surface of the mould. Moulds are typically cooled by placing them in a brine bath. The liquid mix of a frozen confection is allowed to remain in the mould for a period of time during which the liquid in contact with the mould freezes. Any unfrozen liquid is then removed by suction. This leaves a shell formed from a frozen layer of product on the mould. This step is repeated with further liquid mixes of frozen confections which themselves freeze in different layers to form the multilayered product. A final core is then added and a stick is usually inserted. The product is then removed from the mould and packaged.

An alternative to the fill and suck technique is the nitrogen dipping technique. In this technique a frozen confection core is dipped into a bath of liquid nitrogen which dramatically cools the external surface of the core to a temperature of - 100°C or less. The core is then dipped into a bath of coating material. Due to the very low temperature of the dipped core, the coating material freezes immediately when it comes into contact with the core. The coating material thus coats the core and when it is removed from the coating material a newly coated product is obtained.

The existing peelable products that have recently been launched and that have a frozen confection core with gel layer on the outside can be made using the fill and suck technique. The composition of the first frozen confection that is dosed into the mould is modified in order to obtain the gelled outer layer. The existing products use a thermosetting gelling system. In these systems, biopolymers such as gelatine or agar are mixed with an aqueous phase. This aqueous phase is heated in order to achieve an elevated temperature at which the thermosetting gelling biopolymers will dissolve and interact prior to forming the gel matrix. In an alternative thermosetting gelling system, gelling agents may also be a synergistic combination of one or more thermosetting biopolymers that on mixing will form a gel of a higher modulus. Examples include: xanthan with locust bean gum; agar with locust bean gum; and carrageenan with locust bean gum. Again, these components must be mixed with an aqueous phase that has been heated.

In order to make the existing products, the mixture with the thermosetting gelling system must first be heated in order to mix the components and to make it processable. It is then poured into the moulds which must cool the mix down from the elevated temperature in order to form the gel. The mix remains in the mould until it has partially frozen and/or gelled and the excess liquid can then be removed by suction. The other parts of the product are then added.

However, this process demands increased energy consumption for heating and cooling. The heated liquids also present a danger to employees on the production line and these lines have to run at reduced speeds because of the time taken in heating and cooling the gels. Finally, the use of heated liquids increases the risk of microbial contamination.

Crucially, thermosetting gels cannot be used with the nitrogen dipping technique. If the coating material employs a thermosetting gelling agent then the coating must be heated. As such, when the nitrogen dipped core is placed in the heated coating material the coating heats the core up rapidly and will not adhere to the product. Such a process will not allow for a coated product to be formed.

Chemically setting gelling systems provide an alternative to thermosetting gelling systems and do not require elevated temperatures. These use chemically setting gelling biopolymers which derive their gel structure from an interaction between the biopolymer and an appropriate divalent cation. Examples of chemically setting gelling biopolymers include alginates (e.g. sodium alginate), iota-carrageenan, kappa-carrageenan and pectin. Appropriate divalent cations include $Ca^{2+}$, $Cu^{2+}$, or $Zn^{2+}$. Typically, two separate streams, each of which contains one of the components of a chemically setting gelling agent are mixed. For example, the mix may be made in two parts, one containing sodium alginate and the other containing a source of $Ca^{2+}$ ions. When the two mixes are combined, the alginate reacts with the $Ca^{2+}$ ions to form the gel.

The use of such chemically setting gelling systems is disclosed in documents such as the following. US2013/045246 discloses the use of chemically setting gelling systems for enclosing liquid substrates but does not make any mention of frozen confections nor peelable coatings. US4985263 relates to a similar system used to provide a low calorie coating for frozen confectionery products, which forms a skin and which provides a firm outside coating surface about the confectionery products. Again, no mention is made of peelable coatings. WO2013/007493 relates to a frozen confectionery product which comprises a core of a frozen confection, which is at least partially coated with a gel, characterized in that the core of frozen confection comprises an ice structuring protein. The product is formed using co-extrusion. US3752678 discloses a frozen foodstuff coated with an aqueous thixotropic gel based on a water soluble polysaccharide but does not relate to peelable products nor does it relate to nitrogen dipping as discussed herein. US6379724 describes an ice confection coating of an aqueous based sol containing a pectin and a setting agent in an amount sufficient to cause gelation of the sol. However, the products described do not have a peelable coating. JP60196153 aims to obtain a slowly melting coated ice-cream having excellent palatability, taste and flavor, by coating an ice-cream, etc. with a low-melting pectin gel. Again, no mention is made of a peelable coating.

Despite the availability of chemically setting gelling systems it is apparent from the foregoing that they have not been utilised in the production of frozen confections with peelable coatings. In fact, we have found that it is not possible to merely provide a coating layer comprising the necessary chemically setting gelling biopolymers and divalent cations. If the coating material contains both these ingredients, the gel can set too quickly such that the core cannot be dipped into it. In addition, it can be difficult to provide gelling agents in the correct amounts such that the gel layer is strong enough to adhere to the product but malleable enough so that it can be peeled off without breaking. The present invention therefore provides a specific process that allows the use of chemically setting gelling biopolymers to be used in the manufacture of these products using the nitrogen dipping technique.

We have now surprisingly found that if the chemically setting gelling biopolymers are provided separately from the divalent cations, then chemically setting gelling systems can be used in the nitrogen dipping technique and a high quality peelable product is obtained. The divalent cation source can be provided in an intermediate step in which a second material, typically a liquid mix, comprising a relatively high concentration of a divalent cation source is applied to the surface of the frozen confection core. The core is then dipped in liquid nitrogen and then a coating material which comprises a chemically setting gelling biopolymer is applied. The intermediate step thereby provides a thin layer of a second material containing cations which lies between the core and the coating and which remains in contact with the coating layer. The divalent ions are therefore able to permeate into the coating material where they crosslink the polymers and hence form the gel.

In a similar and alternative manner, the core can first be dipped in liquid nitrogen and a coating material containing the chemically setting gelling biopolymer can be applied. The second material, typically a liquid mix, comprising a relatively high concentration of a divalent cation source is then applied to the surface of the coated frozen confection core. This additional step thereby provides a thin layer of second material comprising a source of divalent cations which remains in contact with the coating layer. The divalent ions are therefore able to permeate into the coating layer wherein the cations crosslink the polymers and hence form the gel. The process of the invention therefore comprises the steps of:

a) Providing a frozen confection core and
b) Dipping the frozen confection core in liquid nitrogen and then applying a coating material comprising from 10 wt% to 60 wt% total solids, from 0.1 wt % to 5 wt% of a chemically setting gelling biopolymer selected from the group consisting of alginates, iota-carrageenan and kappa-carrageenan, and from 0.05wt% to 2wt% pectin to the frozen confection core

wherein
a second material comprising from 0.25 wt% to 10 wt% of a source of divalent cations is applied to the product between steps a) and b) or after step b).

Crucially, the chemically setting gelling biopolymer and the source of divalent cations are kept separate up until the point where the core is coated.

The adherence of the second material comprising a source of divalent cations can be enhanced by dipping the product in liquid nitrogen. Therefore the product can optionally be dipped in liquid nitrogen immediately prior to the application of the second material.

The chemically setting gelling biopolymer is present in an amount from 0.1 wt % to 5 wt%. The chemically setting gelling biopolymer is an alginate, iota-carrageenan or kappa-carrageenan. In a preferred embodiment the chemically setting gelling biopolymer is sodium alginate.

In order to avoid the gel forming prematurely during production, the frozen confection core contains no more than 0.2 wt% of a source of divalent cations, preferably it is free from divalent cations.

Where the chemically setting gelling biopolymer is not pectin, the material containing the chemically setting gelling biopolymer preferably also comprises from 0.05 wt % to 2 wt % pectin since this provides an enhanced peelable gel layer.

The total solids content of the coating material can play a role in the peelability of the layer and so the gel layer comprises from 10 wt% to 60 wt% total solids.

The second material contains a source of divalent cations required to cross link the biopolymers. The second material contains typically contains an amount of from 0.25 wt% to 10 wt% of a source of divalent cations. The divalent cations are preferably one or more of $Ca^{2+}$, $Cu^{2+}$, or $Zn^{2+}$. When an alginate is used, the divalent cation source preferably comprises a source of $Ca^{2+}$ ions, preferably calcium chloride.

The divalent cation source may also contain from 1 wt% to 50 wt% of an acid, preferably citric acid. It will typically have a pH of at most 6.

The process allows for the production of a new product format that has previously not been possible. Surprisingly, it appears that the separate provision of the chemically setting gelling biopolymer and the source of divalent cations not only allows for the production of peelable products using the nitrogen dipping process, it also provides a higher quality gel even when the products are subjected to temperature abuse. Normally products are stored and transported at temperatures below -20°C but sometimes the cold supply chain is not able to provide these consistently low temperatures. When the products of the invention were subjected to temperature fluctuations between -20°C and -10°C it was found that the peelability of the outer gel layer was not compromised. This is believed to be because at the higher temperatures more divalent cations were able to interact with the chemically setting gelling biopolymers and therefore the gel became more cross-linked and stronger. The process and products directly obtained by said process are therefore resistant to temperature abuse in the supply chain.

The present invention will now be further described with reference to the following non-limiting examples.

## Examples

For the sake of clarity: In the tables below which describe product components, the wt% values given are the weight percent *per component,* not weight percent of the final product.

### Example 1 - Water Ice

Standard water ice products were obtained from Sainsbury's. The products were referred to as "Rainbow Lollies" by the manufacturer. The ingredients as listed on the pack comprised: Pineapple Flavoured Water Ice (40%); Lemon Flavoured Water Ice (28%); Orange Flavoured Water Ice (23%); Blackcurrant Flavoured Water Ice (10%).Pineapple Flavoured Water Ice contains: Water, Pineapple Juice From Concentrate (25%), Sugar, Flavourings, Citric Acid, Stabiliser: Guar Gum; Ascorbic Acid, Colour: Riboflavin. Lemon Flavoured Water Ice contains: Water, Sugar, Lemon Juice From Concentrate (15%), Apple Juice From Concentrate (13%), Flavourings, Stabiliser: Guar Gum; Citric Acid, Nettle Extract, Ascorbic Acid. Orange Flavoured Water Ice contains: Water, Orange Juice From Concentrate (25%), Sugar, Glucose Syrup, Dextrose, Citric Acid, Flavourings, Stabiliser: Guar Gum; Colours: Beta-carotene, Beetroot Red; Ascorbic Acid. Blackcurrant Flavoured Water Ice contains: Water, Blackcurrant Juice From Concentrate (26%), Sugar, Dextrose, Flavourings, Citric Acid, Stabiliser: Guar Gum; Ascorbic Acid.

Three different coating materials (C1, C2, C3) were prepared according to the formulations in Table 1. The coating materials were prepared by combining the stabilisers and the chemically setting gelling biopolymers with the sugars and blending into water at room temperature. The mix was heated to 85°C to hydrate the stabilisers and to pasteurise the mix. The mix was cooled to +5°C ready for use.

**Table 1 - Coating material formulations.**

| Ingredient | C1 wt% | C2 wt% | C3 wt% |
|---|---|---|---|
| Sucrose | 9 | 9 | 9 |
| Dextrose | 10 | 10 | 10 |
| Maltodextrin (D.E. 40) | 11.945 | 11.945 | 11.945 |
| Alginate | 1 | 1.5 | 1 |
| Pectin | 0.4 | 0.4 | 0.4 |
| Xanthan | - | - | 0.1 |
| Water | to 100 | to 100 | to 100 |

A source of divalent cations was prepared according to the formulation of Table 2. The source of divalent cations was prepared by dissolving the calcium chloride in water at room temperature. Once the calcium chloride had dissolved, the citric acid was added. The mix was also stored at +5°C ready for use.

**Table 2 - Source of divalent cations formulation.**

| Ingredient | Source of divalent cations |
|---|---|
| | wt% |
| Calcium Chloride | 3.17 |
| Citric Acid | 10.5 |
| Water | to 100 |

The water ice products were prepared by 2 methods, A and B.

In method A the following steps were taken: The Sainsbury's product was weighed; dipped in a liquid nitrogen bath; dipped in the source of divalent cations; dipped in a liquid nitrogen bath; weighed again to determine the amount of the source of divalent cations that had been applied; dipped in a liquid nitrogen bath; dipped in one of the coating materials (C1, C2, C3); dipped in a liquid nitrogen bath; and finally weighed again to determine the amount of coating material that had been applied.

In method B the following steps were taken: The Sainsbury's product was weighed; dipped in a liquid nitrogen bath; dipped in one of the coating materials (C1, C2, C3); dipped in a liquid nitrogen bath; weighed again to determine the amount of coating material that had been applied; dipped in a liquid nitrogen bath; dipped in the source of divalent cations; dipped in a liquid nitrogen bath; and finally weighed again to determine the amount of the source of divalent cations that had been applied

As will be appreciated, 6 products types were therefore generated (3 coatings x 2 methods). The codes for these products are as follows:

WI_C1_A:    Water ice with coating C1 made using Method A
WI_C1_B:    Water ice with coating C1 made using Method B
WI_C2_A:    Water ice with coating C2 made using Method A
WI_C2_A:    Water ice with coating C2 made using Method B
WI_C3_A:    Water ice with coating C3 made using Method A
WI_C3_B:    Water ice with coating C3 made using Method B

The water ice products were produced in duplicate, denoted "<code>_Rep1" or "<code>_Rep2" in Table 3 below which provides the pick up weights of the source of divalent cations and of the coating material.

**Table 3 - Pick up weights of the source of divalent cations and of the coating material for Water Ice products**

| Product Code | Weight (g) | | | | |
|---|---|---|---|---|---|
| | Core | Core + divalent cations | Divalent cations pick up | Core + divalent cations + coating | Coating pick up |
| WI_C1_A_Rep1 | 43.7 | 46.7 | 3 | 63.6 | 16.9 |
| WI_C1_A_Rep2 | 41.6 | 44.4 | 2.8 | 61.1 | 16.7 |
| WI_C2_A_Rep1 | 43.9 | 46.4 | 2.5 | 68.3 | 21.9 |
| WI_C2_A_Rep2 | 43.2 | 46 | 2.8 | 68.5 | 22.5 |
| WI_C3_A_Rep1 | 42.6 | 45.3 | 2.7 | 61.3 | 16 |
| WI_C3_A_Rep2 | 44.1 | 47.4 | 3.3 | 62.5 | 15.1 |

(continued)

| | Core | Core + coating material | Coating material pick up | Core + coating + divalent cations | Divalent cations pick up |
|---|---|---|---|---|---|
| WI_C1_B_Rep1 | 44.3 | 61.1 | 16.8 | 62.1 | 1 |
| WI_C1_B_Rep2 | 41.7 | 59.1 | 17.4 | 60.1 | 1 |
| WI_C2_B_Rep1 | 42 | 63.7 | 21.7 | 65.1 | 1.4 |
| WI_C2_B_Rep2 | 41 | 61.3 | 20.3 | 63 | 1.7 |
| WI_C3_B_Rep1 | 42.5 | 57.4 | 14.9 | 58.7 | 1.3 |
| WI_C3_B_Rep2 | 41.5 | 55.7 | 14.2 | 58.3 | 2.6 |

The products were then hardened off in a blast freezer at -35°C, packed into sleeves and stored at -25°C.

The products were subsequently removed from the storage. The coatings had all formed a gel layer. The gel layer was scored helically with a sharp knife and the ability of the coatings to be peeled away was assessed.

It was found that all the water ice products were easily produced and subsequently all products peeled well. It was noted that the products made using method A had a shiny appearance to the coating and those made using method B had an attractive matt finish to the coating. All products had a high quality gel layer with no ice in the gel. The gel coatings all had an excellent firm structure yet remained peelable.

It is therefore apparent that the process if the present invention allows for the production of frozen confections having a gelled outer layer that utilises chemically setting gelling biopolymer. Furthermore, the products can be made using nitrogen dipping and the resulting products provide a very easily peelable outer layer.

Example 2 - Milk Ice

Standard milk ice products were also obtained from Sainsbury's. The products were referred to as "Vanilla Milk Lollies" by the manufacturer. The ingredients as listed on the pack comprised: Whole Milk (38%), Partially Reconstituted Skimmed Milk Concentrate, Sugar, Glucose Syrup, Double Cream, Milk Calcium Complex, Dextrose, Emulsifier: Mono- and Diglycerides of Fatty Acids; Stabilisers: Carob Gum, Guar Gum; Flavouring.

Three different coating materials (C1, C2, C3) were again prepared according to the formulations in Table 1 above. The coating materials were prepared by combining the stabilisers and the chemically setting gelling biopolymers with the sugars and blending into water at room temperature. The mix was heated to 85°C to hydrate the stabilisers and to pasteurise the mix. The mix was cooled to +5°C ready for use.

A source of divalent cations was prepared according to the formulation of Table 2 above. The source of divalent cations was prepared by dissolving the calcium chloride in water at room temperature. Once the calcium chloride had dissolved, the citric acid was added. The mix was also stored at +5°C ready for use.

The milk ice products were prepared by 2 methods, A and B as described above.

As will be appreciated, 6 products types were therefore generated (3 coatings x 2 methods). The codes for these products are as follows:

MI_C1_A:    Milk ice with coating C1 made using Method A
MI_C1_B:    Milk ice with coating C1 made using Method B
MI_C2_A:    Milk ice with coating C2 made using Method A
MI_C2_A:    Milk ice with coating C2 made using Method B
MI_C3_A:    Milk ice with coating C3 made using Method A
MI_C3_B:    Milk ice with coating C3 made using Method B

The milk ice products were produced in duplicate, denoted "<code>_Rep1" or "<code>_Rep2" in Table 4 below which provides the pick up weights of the coating material and of the source of divalent cations.

**Table 4 - Pick up weights of the source of divalent cations and of the coating material for Milk Ice products**

| Product Code | Weight (g) | | | | |
|---|---|---|---|---|---|
| | Core | Core + divalent cations | Divalent cations pick up | Core + divalent cations + coating | Coating pick up |
| MI_C1_A_ Rep1 | 40.3 | 42.6 | 2.3 | 58.7 | 16.1 |
| MI_C1_A_ Rep2 | 40.2 | 42.8 | 2.6 | 59 | 16.2 |
| MI_C2_A_ Rep1 | 39.9 | 41.1 | 1.2 | 65.8 | 24.7 |
| MI_C2_A_ Rep2 | 40.4 | 42.5 | 2.1 | 64.5 | 22 |
| MI_C3_A_ Rep1 | 40.3 | 42.8 | 2.5 | 58 | 15.2 |
| MI_C3_A_ Rep2 | 39.9 | 42.2 | 2.3 | 58.4 | 16.2 |
| | Core | Core + coating material | Coating material pick up | Core + coating + divalent cations | Divalent cations pick up |
| MI_C1_B_ Rep1 | 39.9 | 55.4 | 15.5 | 56.5 | 1.1 |
| MI_C1_B_ Rep2 | 40.1 | 56.3 | 16.2 | 57.2 | 0.9 |
| MI_C2_B_ Rep1 | 39.8 | 60.2 | 20.4 | 61.1 | 0.9 |
| MI_C2_B_ Rep2 | 40.5 | 60.8 | 20.3 | 62 | 1.2 |
| MI_C3_B_ Rep1 | 40.4 | 56.1 | 15.7 | 57.6 | 1.5 |
| MI_C3_B_ Rep2 | 40.3 | 55.9 | 15.6 | 56.6 | 0.7 |

The products were then hardened off in a blast freezer at -35°C, packed into sleeves and stored at -25°C.

The milk ice products were subsequently removed from the storage. The coatings had all formed a gel layer. The gel layer was scored helically with a sharp knife and the ability of the coatings to be peeled away was assessed.

It was found that all products were easily produced and subsequently all products peeled well. The quality of the peeling is exemplified in Figure 1 which shows that the coating layer for all the milk ice products could be easily removed with very little, if any, breakage. Again, it was noted that the milk ice products made using method A had a shiny appearance to the coating and those made using method B had an attractive matt finish to the coating. As before, all products had a high quality gel layer with no ice in the gel. The gel coatings all had an excellent firm structure yet remained peelable.

It is therefore further apparent that the process of the present invention allows for the production of frozen confections having a gelled outer layer that utilises chemically setting gelling biopolymer. Furthermore, the products can be made using nitrogen dipping and the resulting products provide a very easily peelable outer layer.

Example 3 - Temperature Abuse

Samples of the Water Ice products (WI_C1_A, WI_C2_A, WI_C3_A, WI_C1_B, WI_C2_B, WI_C3_B) and the Milk Ice products (MI_C1_A, MI_C2_A, MI_C3_A, MI_C1_B, MI_C2_B, MI_C3_B) were subjected to temperature abuse by placing them in an environment where the temperature cycled between -10°C and -20°C for a period of 2 weeks.

Despite the temperature abuse, it was found that all products could still be peeled. It was also found that the products made using Method B peeled slightly better than those made using Method A.

## Claims

1. A process for the manufacture of a frozen confection with a peelable coating comprising the steps of:

   a) Providing a frozen confection core and
   b) Dipping the frozen confection core in liquid nitrogen and then applying a coating material comprising from 10 wt% to 60 wt% total solids, from 0.1 wt% to 5 wt% of a chemically setting gelling biopolymer selected from the group consisting of alginates, iota-carrageenan and kappa-carrageenan, and from 0.05 wt % to 2 wt% pectin to the frozen confection core

   wherein a second material comprising from 0.25 wt% to 10 wt % of a source of divalent cations is applied to the product between steps a) and b) or after step b).

2. A process according to claim 1 wherein the frozen confection core is a water ice or a milk ice.

3. A process according to any of the preceding claims wherein the chemically setting gelling biopolymer is sodium alginate.

4. A process according to any of the preceding claims wherein the divalent cations are selected from the group consisting of $Ca^{2+}$, $Cu^{2+}$, or $Zn^{2+}$.

5. A process according to claims 1 or 2 wherein the chemically setting gelling biopolymer is an alginate and wherein the second material comprises calcium chloride.

6. A process according to any of the preceding claims wherein the second material comprises from 1 wt% to 50 wt% of an acid.


## Patentansprüche

1. Verfahren zur Herstellung einer gefrorenen Süßware mit einer ablösbaren Beschichtung, umfassend die Schritte:

   a) Bereitstellen eines gefrorenen Zuckerwarenkerns und
   b) Eintauchen des gefrorenen Zuckerwarenkerns in flüssigen Stickstoff und darauf Auftragen eines Beschichtungsmaterials, das von 10 Gew.-% bis 60 Gew.-% Gesamtfeststoffe, von 0,1 Gew.-% bis 5 Gew.-% eines chemisch abbindenden, gelierenden Biopolymers, das aus der aus Alginaten, Jota-Carrageen und Kappa-Carrageen bestehenden Gruppe ausgewählt ist, und von 0,05 Gew.-% bis 2 Gew.-% Pektin umfasst, auf den gefrorenen Zuckerwarenkern,

   wobei ein zweites Material, das von 0,25 Gew.-% bis 10 Gew.-% einer Quelle von zweiwertigen Kationen umfasst, zwischen den Schritten a) und b) oder nach Schritt b) auf das Produkt aufgetragen wird.

2. Verfahren nach Anspruch 1, wobei der gefrorene Zuckerwarenkern ein Wassereis oder ein Milcheis darstellt.

3. Verfahren nach irgendeinem der vorhergehenden Ansprüche, wobei das chemisch abbindende, gelierende Biopolymer Natriumalginat ist.

4. Verfahren nach irgendeinem der vorhergehenden Ansprüche, wobei die zweiwertigen Kationen aus der aus $Ca^{2+}$, $Cu^{2+}$ oder $Zn^{2+}$ bestehenden Gruppe ausgewählt sind.

5. Verfahren nach Anspruch 1 oder 2, wobei das chemisch abbindende, gelierende Biopolymer ein Alginat ist und wobei das zweite Material Calciumchlorid umfasst.

6. Verfahren nach irgendeinem der vorhergehenden Ansprüche, wobei das zweite Material von 1 Gew.-% bis 50 Gew.-

% einer Säure umfasst.

**Revendications**

1. Procédé pour la fabrication d'une confiserie congelée avec un revêtement pelable comprenant les étapes de :

   a) fourniture d'un noyau de confiserie congelée et

   b) immersion du noyau de confiserie congelée dans de l'azote liquide et application subséquente d'un matériau de revêtement comprenant de 10 % en masse à 60 % en masse de solides totaux, de 0,1 % en masse à 5 % en masse d'un biopolymère gélifiant durcissant chimiquement choisi dans le groupe constitué d'alginates, d'iota-carraghénane et de kappa-carraghénane, et de 0,05 % en masse à 2 % en masse de pectine au noyau de confiserie congelée

   dans lequel un second matériau comprenant de 0,25 % en masse à 10 % en masse d'une source de cations divalents est appliqué au produit entre les étapes a) et b) ou après l'étape b).

2. Procédé selon la revendication 1, dans lequel le noyau de confiserie congelée est une glace à l'eau ou une glace au lait.

3. Procédé selon l'une quelconque des revendications précédentes, dans lequel le biopolymère gélifiant durcissant chimiquement est l'alginate de sodium.

4. Procédé selon l'une quelconque des revendications précédentes, dans lequel les cations divalents sont choisis dans le groupe consistant en $Ca^{2+}$, $Cu^{2+}$, ou $Zn^{2+}$.

5. Procédé selon les revendications 1 ou 2, dans lequel le biopolymère gélifiant durcissant chimiquement est un alginate et dans lequel le second matériau comprend du chlorure de calcium.

6. Procédé selon l'une quelconque des revendications précédentes, dans lequel le second matériau comprend de 1 % en masse à 50 % en masse d'un acide.

MI_C1_A

MI_C2_A

MI_C3_A

MI_C1_B

MI_C2_B

MI_C3_B

# Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013045246 A
- US 4985263 A
- WO 2013007493 A
- US 3752678 A
- US 6379724 B
- JP 60196153 B

**Non-patent literature cited in the description**

- **R.T. MARSHALL ; H.D. GOFF ; R.W. HARTEL.** Ice Cream. Kluwer Academic / Plenum Publishers, 2003
- **C.J. CLARKE.** The Science of Ice Cream. Royal Society of Chemistry, 2004